# FASCICULE DE BREVET EUROPEEN

(11) **EP 2 827 639 B1**
(45) Date de publication et mention de la délivrance du brevet: **08.08.2018**
(21) Numéro de dépôt: 14177100.6
(22) Date de dépôt: 15.07.2014
(51) Int. Cl.: H04W 36/00

(54) **PROCÉDÉ DE GESTION D'AU MOINS UNE CONNEXION VIRTUELLE DYNAMIQUE ENTRE UN TERMINAL MOBILE ET UN RÉSEAU DE COMMUNICATION, ET RÉSEAU DE COMMUNICATION ASSOCIÉ**
VERFAHREN ZUR VERWALTUNG MINDESTENS EINER DYNAMISCHEN VIRTUELLEN VERBINDUNG ZWISCHEN EINEM MOBILEN ENDGERÄT UND EINEM KOMMUNIKATIONSNETZ UND ENTSPRECHENDES KOMMUNIKATIONSNETZ
METHOD OF MANAGING AT LEAST ONE DYNAMIC VIRTUAL CONNECTION BETWEEN A MOBILE TERMINAL AND A COMMUNICATION NETWORK AND ASSOCIATED COMMUNICATION NETWORK

(30) Priorité: 15.07.2013 FR 1301668
(43) Date de publication de la demande: 21.01.2015
(73) Titulaire: Thales, 92200 Neuilly Sur Seine (FR)
(72) Inventeur: Martinez, Nataël, 78141 Velizy Cedex (FR); Mathieu, Christophe, 78141 Velizy Cedex (FR)
(74) Mandataire: Lavoix

(56) Documents cités:
- US-A1- 2010 074 109
- US-A1- 2012 214 492

## Description

La présente invention concerne un procédé de gestion d'au moins une connexion virtuelle dynamique entre un terminal mobile et un réseau de communication.

Un réseau de communication est notamment divulgué dans le document US 2012/214492 où un même gestionnaire de qualité de service est propre à être connecté à la fois à une passerelle précédente et une passerelle suivante au fur et à mesure du déplacement d'un terminal mobile.

Le réseau de communication, selon la présente invention, est conforme à la norme LTE (de l'anglais *Long Term Evolution*) définie par l'organisme de normalisation 3GPP (de l'anglais *3rd Generation Partnership Project*). Le réseau de communication comporte plusieurs gestionnaires de qualité de service, également appelés PCRF (de l'anglais *Policy Charging and Rules Function*) selon la norme LTE, plusieurs passerelles de réseau, également appelées EPC (de l'anglais *Evolved Packet Core*) selon la norme LTE, et plusieurs stations de base, également appelées eNodeB (de l'anglais *evolved Node B*) selon la norme LTE, chaque passerelle de réseau étant reliée, d'une part, à un gestionnaire de qualité de service, et d'autre part, à une ou plusieurs stations de base.

Selon la présente invention, le réseau de communication présente une architecture distribuée en une pluralité de sites radio, chaque site radio comportant son propre gestionnaire de qualité de service, sa propre passerelle réseau et sa ou ses propres stations de base.

Le terminal mobile, également appelé UE (de l'anglais *User Equipment*) selon la norme LTE, est propre à être connecté à une station de base et à être relié à une passerelle via la station de base, ladite passerelle étant fonction de la localisation du terminal mobile.

Une connexion virtuelle statique (de l'anglais *static bearer*) au sens de la norme LTE est agencée par défaut entre le terminal mobile et la passerelle, cette connexion virtuelle statique étant alors appelée connexion virtuelle par défaut (de l'anglais *default bearer*) au sens de la norme LTE. En complément, une ou plusieurs connexions virtuelles statiques sont des connexions virtuelles dédiées (de l'anglais *dedicated bearer*) au sens de la norme LTE.

Une ou plusieurs connexions virtuelles dynamiques (de l'anglais *dynamic bearer*) selon la norme LTE sont en outre agencées entre le terminal mobile et la passerelle, via la station de base, chaque connexion virtuelle dynamique comportant au moins un paramètre de connexion. La ou les connexions virtuelles dynamiques sont des connexions virtuelles dédiées au sens de la norme LTE.

Le procédé comprend l'étape consistant à détecter la connexion du terminal mobile à une autre station de base, l'autre station de base étant reliée à une passerelle suivante à laquelle le terminal mobile n'était pas précédemment relié, l'étape de détection étant effectuée par la passerelle suivante. Cette étape de détection est, par exemple, consécutive à un changement de localisation du terminal mobile depuis une zone de couverture associée à la passerelle initiale, également appelée passerelle précédente, vers une zone de couverture associée à la passerelle suivante. Le passage d'une passerelle précédente à une passerelle suivante correspond à une procédure dite de transfert (de l'anglais *handover*).

La présente invention concerne également un produit programme d'ordinateur comportant des instructions logicielles, qui lorsqu'elles sont exécutées par un ordinateur, mettent en oeuvre certaines étapes d'un tel procédé.

La présente invention concerne également un tel réseau de communication conforme à la norme LTE.

Le document FR 2 980 938 A1 décrit une procédure de transfert d'une passerelle de réseau précédente à une passerelle de réseau suivante dans un réseau de communication de quatrième génération présentant une architecture distribuée. Lorsque le terminal mobile se connecte à une station de base affiliée à un contrôleur auquel le terminal mobile n'était pas affilié jusqu'à présent, le contrôleur transmet, vers la passerelle de réseau reliée à ladite station de base, dite passerelle suivante, un message comprenant l'adresse IP du terminal mobile. La passerelle suivante diffuse alors, vers les autres passerelles du réseau de communication, un message comportant l'adresse IP du terminal mobile et sa propre adresse IP, afin de les avertir du déplacement du terminal mobile.

Toutefois, la qualité de service, également appelée QoS (de l'anglais *Quality of Service*) d'un tel réseau de communication de quatrième génération à architecture distribuée, bien que satisfaisante, n'est pas optimale.

Le but de l'invention est donc de proposer un procédé de gestion d'au moins une connexion virtuelle dynamique entre le terminal mobile et le réseau de communication, permettant d'améliorer la qualité de service dudit réseau. L'invention est définie par les revendications indépendantes 1, 9, 10 et 11. Ces caractéristiques et avantages de l'invention apparaîtront à la lecture de la description qui va suivre, donnée uniquement à titre d'exemple non limitatif, et faite en se référant aux dessins annexés sur lesquels :
- la figure 1 est une représentation schématique d'un réseau de communication selon un premier mode de réalisation de l'invention,
- la figure 2 est un organigramme d'un procédé de gestion de connexions virtuelles dynamiques entre un terminal mobile et le réseau de communication, et
- la figure 3 est une vue analogue à celle de la figure 1 selon un deuxième mode de réalisation de l'invention.

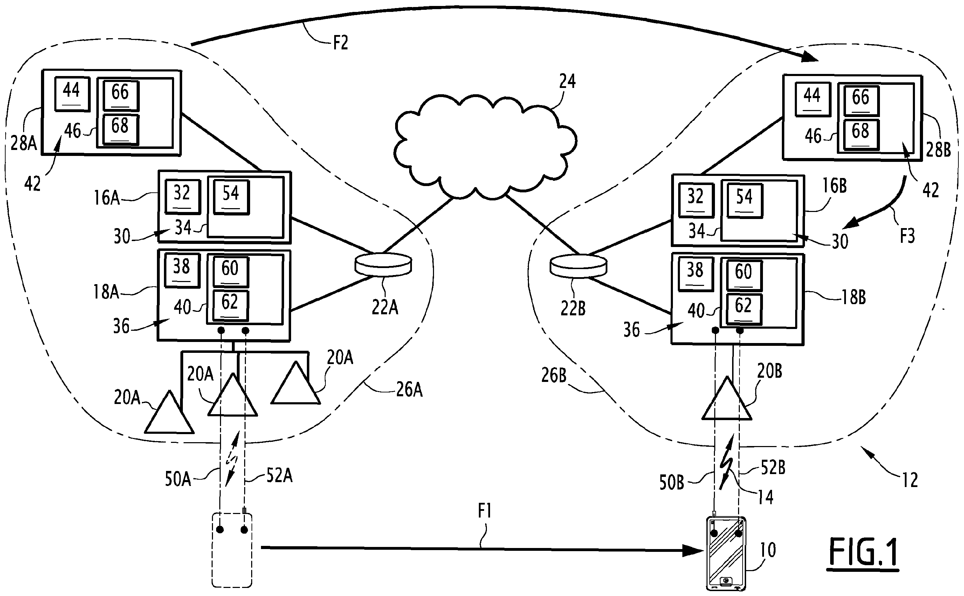

Sur la figure 1, un terminal mobile 10 est relié à un réseau de communication 12 via une liaison radioélectrique 14. Le terminal mobile 10, le réseau de communication 12 et la liaison radioélectrique 14 sont conformes à la norme LTE définie par l'organisme de normalisation 3GPP, de préférence à la version 8 (de l'anglais *release 8*) et aux versions suivantes de la norme LTE. Autrement dit, le terminal mobile 10, le réseau de communication 12 et la liaison radioélectrique 14 sont de préférence conformes notamment aux versions 8, 9 et 10 de la norme LTE.

Le terminal mobile 10 est connu en soi, et est, par exemple, un téléphone portable, un ordinateur portable ou tout autre appareil électronique nomade conforme à la norme LTE.

Le réseau de communication 12 comporte plusieurs gestionnaires de qualité de service 16A ,16B, également appelés PCRF (de l'anglais *Policy Charging and Rules Function*) selon la norme LTE, plusieurs passerelles de réseau 18A, 18B, également appelées EPC (de l'anglais *Evolved Packet Core*) selon la norme LTE, et plusieurs stations de base 20A, 20B, également appelées eNodeB (de l'anglais *evolved Node B*) selon la norme LTE, chaque passerelle de réseau 18A, 18B étant reliée, d'une part, à un gestionnaire de qualité de service 16A ,16B, et d'autre part, à une ou plusieurs stations de base 20A, 20B.

Le réseau de communication 12 comporte en outre des routeurs de communication 22A, 22B, chaque gestionnaire de qualité de service 16A, 16B et chaque passerelle de réseau 18A, 18B étant connectés à un routeur de communication 22A, 22B correspondant.

En complément, le réseau de communication 12 est connecté à un réseau d'interconnexion 24 par l'intermédiaire des routeurs de communication 22A, 22B correspondant, le réseau d'interconnexion 24 étant propre à être relié au réseau Internet, non représenté.

Le réseau de communication 12 présente une architecture distribuée en une pluralité de sites radio 26A, 26B, chaque site radio 26A, 26B comportant son propre gestionnaire de qualité de service 16A ,16B, sa propre passerelle réseau 18A ,18B et sa ou ses propres stations de base 20A, 20B. Dans l'exemple de la figure 1, le réseau de communication 12 comprend un premier site radio 26A et un deuxième site radio 26B, le premier site radio 26A comportant trois stations de base 20A et le deuxième site radio 26B comportant une seule station de base 20B.

Dans l'exemple de réalisation de la figure 1, le réseau de communication 12 comporte en outre plusieurs serveurs 28A, 28B. Chaque serveur 28A, 28B est connecté à un gestionnaire de qualité de service 16A, 16B correspondant, et est relié à une passerelle 18A, 18B correspondante via ledit gestionnaire de qualité de service 16. Chaque site radio 26A, 26B comporte alors en outre au moins un serveur 28A, 28B correspondant.

Le terminal mobile 10 est propre à être connecté à une station de base 20A, 20B correspondante en fonction de sa localisation, c'est-à-dire de son emplacement géographique, et à être relié à la passerelle 18A, 18B correspondante via ladite station de base 20, ladite passerelle 18A, 18B étant également fonction de la localisation du terminal mobile 10. Une zone de couverture est associée à chaque passerelle 18, ou autrement dit à chaque site radio 26. Dans l'exemple de la figure 1, le terminal mobile 10 se trouvait initialement dans la zone de couverture de la passerelle 18A et était connecté au site radio 26A, comme représenté avec le terminal 10 en traits pointillés, plus précisément à l'une des stations de base 20A reliées à ladite passerelle 18A. Le terminal 10 s'est déplacé suivant la flèche F1 dans la zone de couverture de la passerelle 18B et est alors connecté au site radio 26B, plus précisément à la station de base 20B reliée à la passerelle 18B, comme représenté avec le terminal 10 en trait continu.

Le passage de la passerelle initiale 18A à une nouvelle passerelle 18B correspond à une procédure dite de transfert (de l'anglais *handover*).

Dans la suite de la description, la passerelle initiale 18A est également appelée passerelle précédente, étant donné qu'elle était reliée au terminal mobile 10 précédemment à la procédure de transfert, et la nouvelle passerelle 18B est également appelée passerelle suivante étant donnée qu'elle est reliée au terminal mobile 10 suite à la procédure de transfert associée à ce terminal 10.

De manière analogue, les différents éléments du site radio 26A, également appelé site radio précédent, associé à la passerelle précédente 18A sont respectivement appelés gestionnaire de service précédent 16A, station de base précédente 20A pour la station de base à laquelle le terminal mobile 10 était connecté, routeur de communication précédent 20A et serveur précédent 28A.

De manière analogue, les différents éléments du site radio 26B, également appelé site radio suivant, associé à la passerelle suivante 18B sont respectivement appelés gestionnaire de service suivant 16B, station de base suivante 20B pour la station de base à laquelle le terminal mobile 10 est connecté suite à la procédure de transfert, routeur de communication suivant 20B et serveur suivant 28B.

Chaque gestionnaire de qualité de service 16A, 16B comprend une première unité de traitement d'informations 30 formée par exemple d'un premier processeur 32 et d'une première mémoire 34 associée au premier processeur.

Chaque passerelle de réseau 18A, 18B forme une interface de communication entre le site radio 26A, 26B dont elle dépend et le réseau d'interconnexion 24, ce dernier étant lui-même propre à être connecté au réseau Internet. Chaque passerelle de réseau 18A, 18B comprend une deuxième unité de traitement d'informations 36 formée par exemple d'un deuxième processeur 38 et d'une deuxième mémoire 40 associée au deuxième processeur.

Dans l'exemple de réalisation décrit, le gestionnaire de qualité de service 16A ,16B et la passerelle de réseau 18A, 18B sont des équipements électroniques distincts et comportent chacun leur propre unité de traitement d'informations 30, 36. En variante, le gestionnaire de qualité de service 16A ,16B et la passerelle de réseau 18A, 18B sont agencées dans un même équipement électronique comportant une unité de traitement d'informations commune au gestionnaire de qualité de service 16A ,16B et à la passerelle de réseau 18A, 18B.

Chaque routeur de communication 22A, 22B est connu en soi.

Chaque serveur 28A, 28B est, par exemple, un serveur de voix sur IP, également appelé serveur VoIP (de l'anglais *Voice over Internet Protocol*). Chaque serveur 28A, 28B comprend une troisième unité de traitement d'information 42 formée par exemple d'un troisième processeur 44 et d'une troisième mémoire 46 associée au troisième processeur.

Une ou plusieurs connexions virtuelles statiques 50A, 50B (de l'anglais *static bearer*) selon la norme LTE sont propres à être agencées entre le terminal mobile 10 et la passerelle 18A, 18B, via la station de base 20A, 20B, chacune comportant au moins un paramètre de connexion. Une ou plusieurs connexions virtuelles dynamiques 52A, 52B (de l'anglais *dynamic bearer*) selon la norme LTE sont propres à être agencées entre le terminal mobile 10 et la passerelle 18A, 18B, via la station de base 20A, 20B, chacune comportant au moins un paramètre de connexion. Sur la figure 1, les connexions virtuelles statiques 50A, 50B sont représentées sous forme de traits discontinus et les connexions virtuelles dynamiques 52A, 52B sont représentées sous forme de traits pointillés.

Dans la suite de la description, l'ensemble des connexions virtuelles statiques et dynamiques 50A, 52A qui existaient, précédemment à la procédure de transfert, entre la passerelle précédente 18A et le terminal mobile 10, seront appelées connexions virtuelles statiques précédentes 50A, et respectivement connexions virtuelles dynamiques précédentes 52A.

Pour chaque connexion virtuelle 50A, 50B, 52A, 52B, le ou les paramètres de connexion sont choisis parmi le groupe consistant en : un identifiant d'une classe de connexion, un niveau de priorité, un débit garanti et un débit maximal ; à chaque classe de connexion étant associés une priorité, une latence maximale et un taux maximal de perte de paquets. L'identifiant de classe de connexion est également appelé QCI (de l'anglais *QoS Class Identifier*) au sens de la norme LTE, et est un index dans une liste prédéfinie de classes. Le niveau de priorité est également appelé ARP (de l'anglais *Allocation and Retention Policy*), et est utilisé pour des décisions de préemption entre les connexions virtuelles. Le débit garanti est également appelé GBR (de l'anglais *Guaranteed Bit Rate*) au sens de la norme LTE, et définit une valeur de débit garanti dans le cas où la connexion virtuelle 50A, 50B, 52A, 52B est de type GBR. Enfin, le débit maximal est également appelé MBR (de l'anglais *Maximum Bit Rate*), et définit le débit maximal autorisé pour la connexion virtuelle 50A, 50B, 52A, 52B correspondante.

La première mémoire 34 de chaque gestionnaire de qualité de service est apte à stocker un logiciel 54 de requête, auprès de la passerelle 18A, 18B correspondante, en création de connexions virtuelles dynamiques 52A, 52B entre ladite passerelle et le terminal. La requête issue du logiciel de requête 54 est, par exemple, transmise via une interface Gx au sens de la norme LTE entre le gestionnaire de qualité de service 16A, 16B correspondant et la passerelle correspondante 18A, 18B.

La deuxième mémoire 40 de chaque passerelle de réseau est apte à stocker un logiciel 60 de détection de la connexion du terminal mobile 10 à une autre station de base 20B, l'autre station de base 20B étant reliée à ladite passerelle qui correspond à la passerelle suivante 18B à laquelle le terminal mobile 10 n'était pas précédemment relié.

La deuxième mémoire 40 est également apte à stocker un logiciel 62 de génération de connexions virtuelles, notamment de connexions virtuelles dynamiques 52A, 52B, entre la passerelle correspondante 18A, 18B et le terminal mobile 10, cette génération étant effectuée sur requête de la part du gestionnaire de qualité de service 16A, 16B auquel est reliée la passerelle correspondante 18A, 18B.

La troisième mémoire 46 de chaque serveur est apte à stocker un logiciel 66 de transmission du ou des paramètres de connexion de la ou des connexions virtuelles dynamiques précédentes 52A à un autre serveur, correspondant au serveur suivant 28B relié à la passerelle suivante 18B dans le cadre de la procédure de transfert.

La troisième mémoire 46 de chaque serveur est également apte à stocker un logiciel 68 d'envoi, à un gestionnaire de qualité de service autre que celui auquel ledit serveur est relié et correspondant au gestionnaire de qualité de service suivant 16B dans le cadre de la procédure de transfert, , pour chaque connexion virtuelle dynamique 52B à créer, d'un message de commande de la création de la connexion virtuelle dynamique 52B correspondante entre le terminal mobile 10 et la passerelle suivante 18B. Chaque message de commande comporte le ou les paramètres de connexion associés à ladite connexion virtuelle dynamique 52B. Chaque message de commande est, par exemple, transmis via une interface Rx au sens de la norme LTE entre le serveur 28A, 28B correspondant et le gestionnaire de qualité de service 16A, 16B correspondant.

Dans le mode de réalisation décrit, le logiciel de transmission 66, le logiciel d'envoi 68, ainsi que le logiciel de requête 54 et le logiciel de génération 62 forment des moyens de création, via le gestionnaire de qualité de service suivant 16B relié à la passerelle suivante 18B, d'une ou de plusieurs connexions virtuelles dynamiques 52B selon la norme LTE entre le terminal mobile 10 et la passerelle suivante 18B. Le nombre de connexions virtuelles dynamiques 52B créées entre le terminal mobile 10 et la passerelle suivante 18B est égal au nombre de connexions virtuelles dynamiques précédentes 52A agencées entre le terminal mobile 10 et la passerelle précédente 18A, et le ou les paramètres de connexion de la ou des connexions virtuelles dynamiques 52B entre le terminal mobile 10 et la passerelle suivante 18B sont identiques à le ou aux paramètres de connexion de la ou des connexions virtuelles dynamiques précédentes 52A entre le terminal mobile 10 et la passerelle précédente 18A.

En variante, les moyens de requête 54, les moyens de détection 60, les moyens de génération 62, les moyens de transmission 66 et les moyens d'envoi 68 sont réalisés sous forme de circuits électroniques dédiés ou encore sous forme de composants logiques programmables.

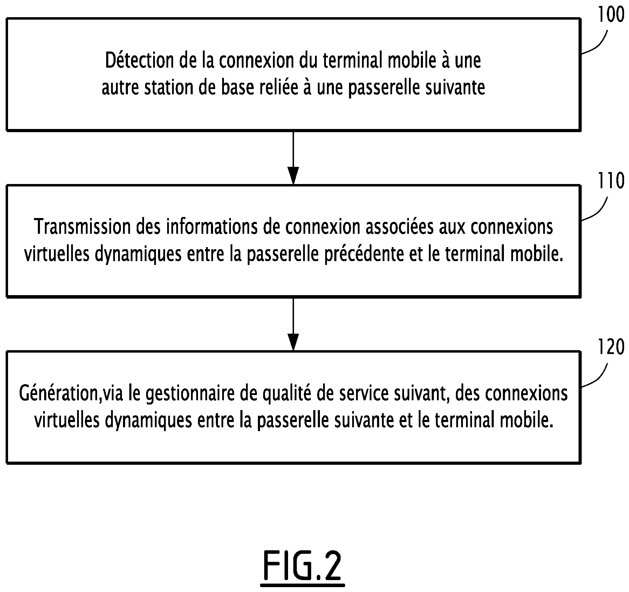

Le fonctionnement du réseau de communication 12 selon l'invention va désormais être décrit à l'aide des figures 1 et 2, la figure 2 représentant un organigramme du procédé de gestion des connexions virtuelles dynamiques 52A, 52B selon l'invention.

Ce fonctionnement est décrit dans le cadre de la procédure de transfert de la passerelle précédente 18A à la passerelle suivante 18B suite au déplacement du terminal 10 suivant la flèche F1 de la zone de couverture associée au site radio précédent 26A jusqu'à la zone de couverture associée au site radio suivant 26B.

Dans l'exemple de la figure 1, une connexion virtuelle statique précédente 50A, à savoir une connexion virtuelle par défaut (de l'anglais *default bearer*), et une connexion virtuelle dynamique précédente 52A étaient agencées entre le terminal mobile 10 et la passerelle précédente 18A précédemment à la procédure de transfert.

La ou les connexions virtuelles dynamiques précédentes 52A agencées entre le terminal mobile 10 et la passerelle précédente 18A ont été créées sur requête du serveur précédent 26A, et celui-ci dispose alors de toutes les informations de connexion, notamment des paramètres de connexion QCI, ARP, GBR et MBR, relatives à ces connexions virtuelles dynamiques précédentes 52A.

Suite au déplacement du terminal 10 dans la zone de couverture associée à la passerelle suivante 18B, ladite passerelle suivante 18B détecte, lors de l'étape 100 et à l'aide de son logiciel de détection 60, la connexion du terminal mobile 10 à la station de base 20B qui lui est reliée. La passerelle suivante 18B informe alors le gestionnaire de qualité de service suivant 16B et le serveur suivant 28B de l'arrivée du terminal mobile 10 dans la zone de couverture associée au site radio 26B dont ils dépendent et de la connexion du terminal mobile 10 à la station de base 20B.

Suite à cette détection et conformément à la procédure de transfert prévue par la norme LTE, une connexion virtuelle statique 50B, à savoir une connexion virtuelle par défaut, est recréée automatiquement entre le terminal mobile 10 et la passerelle suivante 18B, à l'aide du logiciel de génération 62 et sur requête du logiciel de requête 54 du gestionnaire de qualité de service suivant 16B.

Dans le cas où, en complément, des connexions virtuelles statiques dédiées avaient été créées entre le terminal mobile10 et la passerelle précédente 18A, celles-ci sont également recréées automatiquement entre le terminal mobile 10 et la passerelle suivante 18B.

Après avoir reçu l'information de la part de la passerelle suivante 18B selon laquelle le terminal mobile 10 est passé de la zone de couverture associée au site radio précédent 26A à la zone de couverture associée au site radio suivant 26B, le serveur suivant 28B utilise une interface de communication inter-serveurs, non représentée, pour retrouver le serveur précédent 26A, et requiert auprès du serveur précédent 28A les informations de connexion associées aux connexions virtuelles dynamiques précédentes 52A agencées entre le terminal mobile 10 et la passerelle précédente 18A précédemment à la procédure de transfert.

Le serveur précédent 28A transmet alors au serveur suivant 28B (flèche F2), lors de l'étape 110 et à l'aide de son logiciel de transmission 66, les informations de connexion, notamment les paramètres de connexion, tels que les identifiants de classe de connexion QCI, les niveaux de priorité ARP, les débits garantis GBR et les débits maximaux MBR, pour chacune des connexions virtuelles dynamiques précédentes 52A agencées entre le terminal mobile 10 et la passerelle précédente 18A précédemment à la procédure de transfert. Cette transmission est effectuée via les routeurs de communication 22A, 22B et le réseau d'interconnexion 24. Autrement dit, le serveur suivant 28B a récupéré, à l'issue de l'étape 110 et de la part du serveur précédent 28A, le contexte des connexions virtuelles dynamiques précédentes 52A agencées entre le terminal mobile 10 et la passerelle précédente 18A précédemment à la procédure de transfert.

En complément, les informations de connexion comportent une ou plusieurs règles de filtrage associées à chacune des connexions virtuelles. Les règles de filtrage consistent en des critères d'entrée du trafic sur ces connexions virtuelles. Elles sont, par exemple, basées sur des informations telles que des numéros de ports utilisés, des IP sources ou destinations, des tags DSCP (de l'anglais *Differentiated Services Code Point*) renseignés sur les paquets IP.

Après avoir reçu ces informations de connexion de la part du serveur précédent 26A, le serveur suivant 26B envoie, lors de l'étape 120 et à l'aide de son logiciel d'envoi 68, au gestionnaire de qualité de service suivant 16B (flèche F3), pour chaque connexion virtuelle dynamique 52B à créer, le message de commande de la création de la connexion virtuelle dynamique 52B correspondante entre le terminal mobile 10 et la passerelle suivante 18B. Cet envoi est par exemple effectué en utilisant l'interface Rx selon la norme LTE. Le ou les messages de commande contiennent les informations de connexion reçues du serveur précédent 26A afin que le nombre de connexions virtuelles dynamiques 52B qui vont être créées entre le terminal mobile 10 et la passerelle suivante 18B soit égal au nombre de connexions virtuelles dynamiques précédentes 52A précédemment agencées entre le terminal mobile 10 et la passerelle précédente 18A, et que les paramètres de connexion des connexions virtuelles dynamiques 52B entre le terminal mobile et la passerelle suivante 18B soient identiques aux paramètres de connexion des connexions virtuelles dynamiques précédentes 52A entre le terminal mobile et la passerelle précédente 18A.

Lorsque le gestionnaire de qualité de service suivant 16B a reçu, pour chaque connexion virtuelle dynamique 52B à créer, le message de commande de la part du serveur suivant 26B, il requiert auprès de la passerelle suivante 18B, lors de l'étape 120 et à l'aide de son logiciel de requête 54, la création des connexions virtuelles dynamiques 52B entre ladite passerelle suivante 18B et le terminal mobile 10. Cette requête entre le gestionnaire de qualité de service suivant 16B et la passerelle suivante 18B est par exemple transmise en utilisant l'interface Gx selon la norme LTE. La passerelle suivante 18B génère alors, à l'aide de son logiciel de génération 62 et selon les informations de connexion contenues dans chaque message de commande, les connexions virtuelles dynamiques 52B entre elle et le terminal mobile 10.

Le procédé de gestion et le réseau de communication 12 selon l'invention permettent ainsi, suite à la procédure de transfert du terminal mobile 10 entre la passerelle précédente 18A et la passerelle suivante 18B, de recréer automatiquement entre la passerelle suivante 18B et le terminal mobile 10 les connexions virtuelles dynamiques qui existaient, précédemment à ladite procédure de transfert, entre la passerelle précédente 18A et le terminal mobile 10. Ceci permet d'améliorer la qualité de service du réseau de communication 12 selon l'invention par rapport au réseau de communication de l'état de la technique qui ne supporte pas le transfert des connexions virtuelles dynamiques en architecture distribuée.

Ainsi, suite à la procédure de transfert de la passerelle précédente 18A vers la passerelle suivante 18B, l'ensemble des connexions virtuelles statiques et dynamiques 50A, 52A qui existaient précédemment à cette procédure de transfert entre la passerelle précédente 18A et le terminal mobile 10 est recréé automatiquement entre la passerelle suivante 18B et le terminal mobile 10, ce qui permet d'améliorer la qualité de service du réseau de communication 12 selon l'invention. Par recréation des connexions virtuelles, on entend une création de nouvelles connexions virtuelles entre la passerelle suivante et le terminal à l'identique, c'est-à-dire avec les mêmes paramètres de connexion, de celles qui existaient entre la passerelle précédente et le terminal.

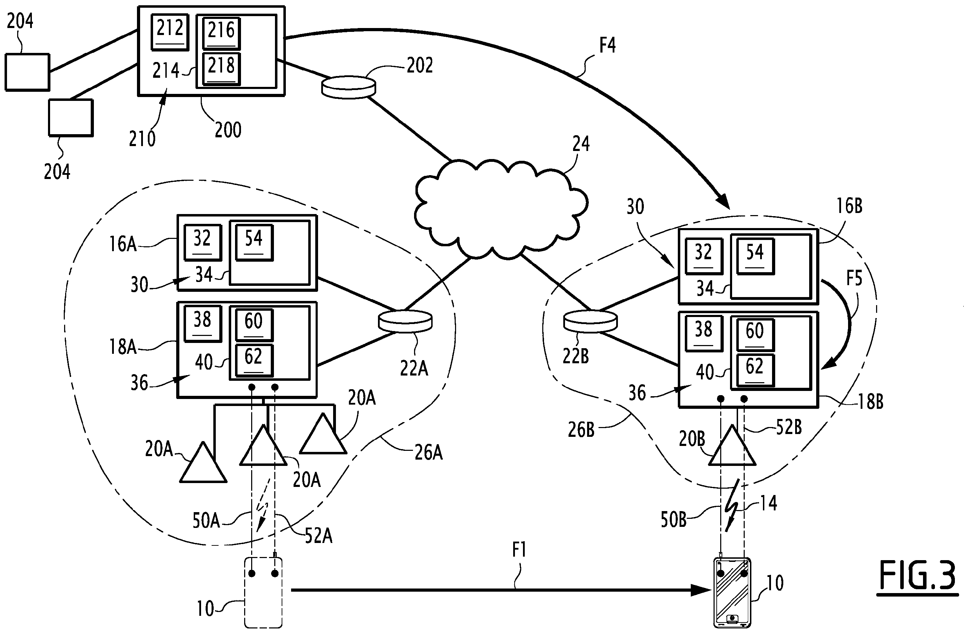

La figure 3 illustre un deuxième mode de réalisation de l'invention pour lequel les éléments identiques au premier mode de réalisation, décrit précédemment en regard des figures 1 et 2, sont repérés par des références identiques et ne sont pas décrits à nouveau.

Selon ce deuxième mode de réalisation, le réseau de communication 12 comprend en outre un organe d'aiguillage 200, également appelé DRA (de l'anglais *Diameter Routing Agent*) au sens de la norme LTE, apte à communiquer avec chaque gestionnaire de qualité de service correspondant 16A, 16B via un routeur de communication 202, le réseau d'interconnexion 24 et le routeur de communication 22A, 22B correspondant. L'organe d'aiguillage 200 est adapté pour aiguiller une demande de qualité de service vers un gestionnaire de qualité de service 16A, 16B correspondant.

Selon ce deuxième mode de réalisation, le réseau de communication 12 comprend en outre un ou plusieurs serveurs 204, tels que des serveurs de voix sur IP, également appelés serveurs VoIP, connectés à l'organe d'aiguillage 200.

Dans l'exemple de la figure 3, le réseau de communication 12 ne comporte pas de serveur relié, pour chaque site radio, au gestionnaire de qualité de service correspondant.

En variante, le réseau de communication 12 comporte également des serveurs, non représentés, reliés, pour chaque site radio, au gestionnaire de qualité de service correspondant. Autrement dit, selon cette variante, chaque site radio comporte également un serveur relié au gestionnaire de qualité de service correspondant. L'homme du métier comprendra alors que le premier mode de réalisation et le deuxième mode de réalisation ne sont pas exclusifs l'un de l'autre.

Dans l'exemple de la figure 3, l'organe d'aiguillage 200 est centralisé pour l'ensemble des sites radio 26A, 26B, est également appelé organe centralisé d'aiguillage, ou encore PCRF DRA (de l'anglais *Policy Charging and Rules Function* - *Diameter Routing Agent*) au sens de la norme LTE.

En variante non représentée, de communication 12 comprend plusieurs organes d'aiguillage 200, chacun étant apte à gérer des connexions virtuelles distinctes.

L'organe d'aiguillage 200 comporte une quatrième unité de traitement d'informations 210 formée par exemple d'un quatrième processeur 212 et d'une quatrième mémoire 214 associée au quatrième processeur.

La quatrième mémoire 214 de l'organe d'aiguillage est apte à stocker un logiciel 216 de transmission du ou des paramètres de connexion de la ou des connexions virtuelles dynamiques précédentes 52A à un autre gestionnaire de qualité de service, correspondant au gestionnaire de qualité de service suivant 16B relié à la passerelle suivante 18B dans le cadre de la procédure de transfert.

La quatrième mémoire 214 est également apte à stocker un logiciel 218 d'envoi, au gestionnaire de qualité de service suivant 16B, pour chaque connexion virtuelle dynamique 52B à créer, d'un message de commande de la création de la connexion virtuelle dynamique 52B correspondante entre le terminal mobile 10 et la passerelle suivante 18B, chaque message de commande comportant le ou les paramètres de connexion associés à ladite connexion virtuelle dynamique 52B.

Selon ce deuxième mode de réalisation, le logiciel de transmission 216, le logiciel d'envoi 218, ainsi que le logiciel de requête 54 et le logiciel de génération 62 forment des moyens de création, via le gestionnaire de qualité de service suivant 16B relié à la passerelle suivante 18B, d'une ou de plusieurs connexions virtuelles dynamiques 52B selon la norme LTE entre le terminal mobile 10 et la passerelle suivante 18B.

Le fonctionnement du réseau de communication 12 selon ce deuxième mode de réalisation va désormais être décrit à l'aide des figures 2 et 3.

De manière analogue au premier mode de réalisation décrit précédemment, ce fonctionnement va être décrit dans le cadre de la procédure de transfert de la passerelle précédente 18A à la passerelle suivante 18B suite au déplacement du terminal 10 suivant la flèche F1 de la zone de couverture associée au site radio précédent 26A jusqu'à la zone de couverture associée au site radio suivant 26B.

Dans l'exemple de la figure 3, des connexions virtuelles statique 50A et dynamique 52A précédentes étaient agencées entre le terminal mobile 10 et la passerelle précédente 18A précédemment à la procédure de transfert.

La ou les connexions virtuelles dynamiques précédentes 52A agencées entre le terminal mobile 10 et la passerelle précédente 18A ont été créées sur requête d'un serveur 204 correspondant à destination de l'organe d'aiguillage 200. Lorsque l'organe d'aiguillage 200 a reçu cette requête en création de connexions virtuelles dynamiques de la part d'un serveur 204 correspondant, il l'a transmise au gestionnaire de qualité de service correspondant 16A, en enregistrant au passage dans sa mémoire 214 toutes les informations de connexion, notamment les paramètres de connexion QCI, ARP, GBR et MBR, relatives à ces connexions virtuelles dynamiques précédentes 52A.

De manière analogue au premier mode de réalisation décrit précédemment, suite au déplacement du terminal 10 selon la flèche F1, la passerelle suivante 18B détecte, lors de l'étape 100, la connexion du terminal mobile 10 à la station de base 20B qui lui est reliée. La passerelle suivante 18B informe alors le gestionnaire de qualité de service suivant 16B et l'organe d'aiguillage 200 de l'arrivée du terminal mobile 10 dans la zone de couverture associée au site radio suivant 26B et de la connexion du terminal mobile 10 à la station de base 20B.

Après avoir reçu l'information de la part de la passerelle suivante 18B selon laquelle le terminal mobile 10 est passé de la zone de couverture associée au site radio précédent 26A à la zone de couverture associée au site radio suivant 26B, l'organe d'aiguillage 200 transmet au gestionnaire de qualité de service suivant 16B (flèche F4), lors de l'étape 110 et à l'aide de son logiciel de transmission 216, les informations de connexion pour chacune des connexions virtuelles dynamiques précédentes 52A agencées entre le terminal mobile 10 et la passerelle précédente 18A précédemment à la procédure de transfert.

Ces informations de connexion comportent notamment les paramètres de connexion, tels que les identifiants de classe de connexion QCI, les niveaux de priorité ARP, les débits garantis GBR et les débits maximaux MBR. Cette transmission est effectuée via les routeurs de communication 202, 22B et le réseau d'interconnexion 24, par exemple en utilisant l'interface Rx selon la norme LTE.

En complément, les informations de connexion comportent une ou plusieurs règles de filtrage associées à chacune des connexions virtuelles. Les règles de filtrage consistent en des critères d'entrée du trafic sur ces connexions virtuelles, et sont, par exemple, basées sur des informations telles que des numéros de ports utilisés, des IP sources ou destinations, des tags DSCP renseignés sur les paquets IP.

L'organe d'aiguillage 200 envoie, lors de l'étape 120 et à l'aide de son logiciel d'envoi 218, au gestionnaire de qualité de service suivant 16B, pour chaque connexion virtuelle dynamique 52B à créer, un message de commande de la création de la connexion virtuelle dynamique 52B correspondante entre le terminal mobile 10 et la passerelle suivante 18B. Cet envoi est par exemple effectué en utilisant l'interface Rx selon la norme LTE. Le ou les messages de commande contiennent les informations de connexion relatives aux connexions virtuelles dynamiques 52B à créer, afin que le nombre de connexions virtuelles dynamiques 52B qui vont être créées entre le terminal mobile 10 et la passerelle suivante 18B soit égal au nombre de connexions virtuelles dynamiques précédentes 52A précédemment agencées entre le terminal mobile 10 et la passerelle précédente 18A, et que les paramètres de connexion des connexions virtuelles dynamiques 52B entre le terminal mobile et la passerelle suivante 18B soient identiques aux paramètres de connexion des connexions virtuelles dynamiques précédentes 52A entre le terminal mobile et la passerelle précédente 18A.

En variante, l'organe d'aiguillage 200 transmet, au gestionnaire de qualité de service suivant 16B, en même temps (flèche F4) les informations de connexion pour chacune des connexions virtuelles dynamiques précédentes 52A et, pour chaque connexion virtuelle dynamique 52B à créer, le message de commande de la création de la connexion virtuelle dynamique 52B correspondante, les informations de connexion respectives étant contenues dans le message de commande correspondant. Autrement dit, selon cette variante, les étapes 110 et 120 forment une même étape.

Lorsque le gestionnaire de qualité de service suivant 16B a reçu, pour chaque connexion virtuelle dynamique 52B à créer, le message de commande de la part l'organe d'aiguillage 200, il requiert auprès de la passerelle suivante 18B (flèche F5), lors de l'étape 120 et à l'aide de son logiciel de requête 54, la création des connexions virtuelles dynamiques 52B entre ladite passerelle suivante 18B et le terminal mobile 10. Cette requête entre le gestionnaire de qualité de service suivant 16B et la passerelle suivante 18B est par exemple transmise en utilisant l'interface Gx selon la norme LTE. La passerelle suivante 18B génère alors, à l'aide de son logiciel de génération 62 et selon les informations de connexion contenues dans chaque message de commande, les connexions virtuelles dynamiques 52B entre elle et le terminal mobile 10.

Le procédé de gestion et le réseau de communication 12 selon ce deuxième mode de réalisation permettent donc également, suite à la procédure de transfert du terminal mobile 10 entre la passerelle précédente 18A et la passerelle suivante 18B, de recréer automatiquement entre la passerelle suivante 18B et le terminal mobile 10 les connexions virtuelles dynamiques qui existaient entre la passerelle précédente 18A et le terminal mobile 10 précédemment à ladite procédure de transfert. Ceci permet d'améliorer également la qualité de service du réseau 12 selon ce deuxième mode de réalisation.

Ainsi, suite à la procédure de transfert de la passerelle précédente 18A à la passerelle suivante 18B, l'ensemble des connexions virtuelles statiques et dynamiques 50A, 52A qui existaient précédemment à cette procédure de transfert entre la passerelle précédente 18A et le terminal mobile 10 est recréé automatiquement entre la passerelle suivante 18B et le terminal mobile 10, ce qui permet d'améliorer la qualité de service du réseau de communication 12 selon ce deuxième mode de réalisation.

L'homme du métier comprendra bien entendu que chaque site radio 26A, 26B est susceptible d'être successivement un site radio précédent ou un site radio suivant selon que le terminal mobile 10 sort de ou bien arrive dans la zone de couverture associée à ce site radio. En outre, étant donné que chaque gestionnaire de qualité de service 16A, 16B, chaque passerelle de réseau 18A, 18B, et également selon le premier mode de réalisation que chaque serveur 28A, 28B, comporte respectivement le logiciel de requête 54, le logiciel de détection 60, le logiciel de génération 62, le logiciel de transmission 66 et le logiciel d'envoi 68, l'ensemble des connexions virtuelles statiques et dynamiques 50A, 52A précédentes qui existaient, précédemment à la procédure de transfert, entre la passerelle précédente et le terminal mobile est bien recréé automatiquement entre la passerelle suivante et le terminal mobile, que le site radio concerné soit un site radio précédent ou bien un site radio suivant.

## Revendications

1. Procédé de gestion d'au moins une connexion virtuelle dynamique (52A, 52B) entre un terminal mobile (10) et un réseau de communication (12), le terminal mobile (10) étant propre à être connecté à une station de base (20A, 20B) et à être relié à une passerelle (18A, 18B) via la station de base, ladite passerelle étant fonction de la localisation du terminal mobile (10),
une ou plusieurs connexions virtuelles dynamiques (52A) selon la norme LTE étant agencées entre le terminal mobile (10) et la passerelle (18A), via la station de base (20A), chacune comportant au moins un paramètre de connexion,
le réseau de communication (12) étant conforme à la norme LTE et présentant une architecture distribuée en au moins deux sites radio (26A, 26B), un site radio (26A) précédent comportant son propre gestionnaire de qualité de service (16A) précédent sa propre passerelle réseau précédente (18A) et sa ou ses propres stations de base précédente(s) (20A), un site radio suivant (26B) comportant son propre gestionnaire de qualité de service (16B) suivant, sa propre passerelle réseau suivante (18A) et sa ou ses propres stations de base suivante(s) (20B),le procédé comprenant l'étape consistant à :
- suite au déplacement du terminal du site radio précédent au site radio suivant, détecter (100) la connexion du terminal mobile (10) à la station de base suivante (20B), reliée à la passerelle suivante (18B) à laquelle le terminal mobile (10) n'était pas précédemment relié, l'étape de détection (100) étant effectuée par la passerelle suivante (18B),
le procédé comprenant en outre l'étape consistant à :
- créer (110, 120), via le gestionnaire de qualité de service suivant (16B) relié à la passerelle suivante (18B), une ou plusieurs connexions virtuelles dynamiques (52B) selon la norme LTE entre le terminal mobile (10) et la passerelle suivante (18B), le nombre de connexions virtuelles dynamiques créées (52B) entre le terminal mobile (10) et la passerelle suivante (18B) étant égal au nombre de connexions virtuelles dynamiques précédentes (52A) agencées entre le terminal mobile (10) et la passerelle précédente (18A), et le ou les paramètres de connexion de la ou des connexions virtuelles dynamiques (52B) entre le terminal mobile (10) et la passerelle suivante (18B) étant identiques à le ou aux paramètres de connexion de la ou des connexions virtuelles dynamiques précédentes (52A) entre le terminal mobile (10) et la passerelle précédente (18A).

2. Procédé selon la revendication 1, dans lequel le réseau de communication (12) comporte en outre plusieurs serveurs (28A, 28B), tels que des serveurs de voix sur IP, chacun étant connecté à un gestionnaire de qualité de service (16A), 16B) correspondant et étant relié à une passerelle (18A, 18B) correspondante via ledit gestionnaire de qualité de service (16A), 16B), et
dans lequel, lors de l'étape de création de la ou des connexions virtuelles dynamiques (52B) entre le terminal mobile et la passerelle suivante, le ou les paramètres de connexion de la ou des connexions virtuelles dynamiques précédentes (52A) sont transmis (110) à un serveur suivant (28B) relié à la passerelle suivante (18B) depuis un serveur précédent (28A) relié à la passerelle précédente (18A).

3. Procédé selon la revendication 2, dans lequel le serveur suivant (28B) envoie au serveur précédent (28A) une requête en transmission de paramètres de connexion pour recevoir le ou les paramètres de connexion de la ou des connexions virtuelles dynamiques précédentes (52A) depuis le serveur précédent (28A).

4. Procédé selon la revendication 2 ou 3, dans lequel, lors de l'étape de création, le serveur suivant (28B) envoie (120), au gestionnaire de qualité de service suivant (16B), pour chaque connexion virtuelle dynamique (52B) à créer, un message de commande de la création de la connexion virtuelle dynamique (52B) correspondante entre le terminal mobile (10) et la passerelle suivante (18B), chaque message de commande comportant le ou les paramètres de connexion associés à ladite connexion virtuelle dynamique (52B).

5. Procédé selon l'une quelconque des revendications précédentes, dans lequel le réseau de communication (12) comporte en outre un organe d'aiguillage (200) apte à communiquer avec chaque gestionnaire de qualité de service (16A, 16B) correspondant et adapté pour aiguiller une demande de qualité de service vers un gestionnaire de qualité de service (16A, 16B) correspondant, et
dans lequel, lors de l'étape de création de la ou des connexions virtuelles dynamiques (52B) entre le terminal mobile (10) et la passerelle suivante (18B), le ou les paramètres de connexion de la ou des connexions virtuelles dynamiques sont transmis (110) au gestionnaire de qualité de service suivant (16B) par l'organe d'aiguillage (200).

6. Procédé selon la revendication 5, dans lequel, lors de l'étape de création, l'organe d'aiguillage (200) envoie (120), au gestionnaire de qualité de service suivant (16B), pour chaque connexion virtuelle dynamique (52B) à créer, un message de commande de la création de la connexion virtuelle dynamique (52B) correspondante entre le terminal mobile (10) et la passerelle suivante (18B), chaque message de commande comportant le ou les paramètres de connexion associés à ladite connexion virtuelle dynamique (52B).

7. Procédé selon l'une quelconque des revendications précédentes, dans lequel le réseau de communication (12) est conforme à la version 8 et aux versions suivantes de la norme LTE, définie par l'organisme de normalisation 3GPP.

8. Procédé selon l'une quelconque des revendications précédentes, dans lequel le ou les paramètres de connexion sont choisis parmi le groupe consistant en : un identifiant d'une classe de connexion, un niveau de priorité, un débit garanti et un débit maximal ; à chaque classe de connexion étant associés une priorité, une latence maximale et un taux maximal de perte de paquets.

9. Produit programme d'ordinateur comportant des instructions logicielles, qui lorsqu'elles sont exécutées par un ordinateur, mettent en oeuvre les étapes du procédé selon la revendication 3 ou 4, incombant au serveur suivant (28B).

10. Produit programme d'ordinateur comportant des instructions logicielles, qui lorsqu'elles sont exécutées par un ordinateur, mettent en oeuvre les étapes du procédé selon la revendication 5 ou 6, incombant à l'organe d'aiguillage (200).

11. Réseau de communication (12) pour communiquer avec au moins un terminal mobile (10),
le terminal mobile (10) étant propre à être connecté à une station de base (20A, 20B) et à être relié à une passerelle (18A, 18B) via la station de base, ladite passerelle étant fonction de la localisation du terminal mobile (10),
une ou plusieurs connexions virtuelles dynamiques (52A) selon la norme LTE étant propres à être agencées entre le terminal mobile (10) et la passerelle (18A), via la station de base (20A), chacune comportant au moins un paramètre de connexion,
le réseau de communication (12) étant conforme à la norme LTE et présentant une architecture distribuée en au moins deux sites radio (26A, 26B), un site radio (26A) précédent comportant son propre gestionnaire de qualité de service (16A) précédent sa propre passerelle réseau précédente (18A) et sa ou ses propres stations de base précédente(s) (20A), un site radio suivant (26B) comportant son propre gestionnaire de qualité de service (16B) suivant, sa propre passerelle réseau suivante (18A) et sa ou ses propres stations de base suivante(s) (20B),
le réseau (12) comprenant en outre des moyens (60) de détection, propre à détecter, suite au déplacement du terminal du site radio précédent au site radio suivant, la connexion du terminal mobile (10) à la station de base suivante (20B), reliée à la passerelle suivante (18B) à laquelle le terminal mobile (10) n'était pas précédemment relié, les moyens de détection (60) étant inclus dans la passerelle suivante (18B), et des moyens (66, 68, 54, 62 ;216, 218, 54, 62) de création, via le gestionnaire de qualité de service suivant (16B) relié à la passerelle suivante (18B), d'une ou de plusieurs connexions virtuelles dynamiques (52B) selon la norme LTE entre le terminal mobile (10) et la passerelle suivante (18B), le nombre de connexions virtuelles dynamiques créées (52B) entre le terminal mobile (10) et la passerelle suivante (18B) étant égal au nombre de connexions virtuelles dynamiques précédentes (52A) agencées entre le terminal mobile (10) et la passerelle précédente (18A), et le ou les paramètres de connexion de la ou des connexions virtuelles dynamiques (52B) entre le terminal mobile (10) et la passerelle suivante (18B) étant identiques à le ou aux paramètres de connexion de la ou des connexions virtuelles dynamiques précédentes (52A) entre le terminal mobile (10) et la passerelle précédente (18A).

12. Réseau de communication (12) selon la revendication 11, dans lequel le réseau de communication (12) comporte en outre plusieurs serveurs (28A, 28B), tels que des serveurs de voix sur IP, chacun étant connecté à un gestionnaire de qualité de service correspondant (16A, 16B) et étant relié à une passerelle correspondante (18A, 18B) via ledit gestionnaire de qualité de service (16A, 16B), et
dans lequel un serveur précédent (28A) relié à la passerelle précédente (18A) comporte des moyens (66) de transmission, lors de la création de la ou des connexions virtuelles dynamiques entre le terminal mobile (10) et la passerelle suivante (18B), du ou des paramètres de connexion de la ou des connexions virtuelles dynamiques précédentes (52A) à un serveur suivant (28B) relié à la passerelle suivante (18B).

13. Réseau de communication (12) selon la revendication 12, dans lequel le serveur suivant (28B) comporte des moyens (68) d'envoi, au gestionnaire de qualité de service suivant (16B), pour chaque connexion virtuelle dynamique (52B) à créer, d'un message de commande de la création de la connexion virtuelle dynamique (52B) correspondante entre le terminal mobile (10) et la passerelle suivante (18B), chaque message de commande comportant le ou les paramètres de connexion associés à ladite connexion virtuelle dynamique (52B).

14. Réseau de communication (12) selon l'une quelconque des revendications 11 à 13, dans lequel le réseau de communication (12) comporte en outre un organe d'aiguillage (200) apte à communiquer avec chaque gestionnaire de qualité de service (16A, 16B) correspondant et adapté pour aiguiller une demande de qualité de service vers un gestionnaire de qualité de service (16A, 16B) correspondant, et
dans lequel l'organe d'aiguillage (200) comporte des moyens (216) de transmission, lors de la création de la ou des connexions virtuelles dynamiques entre le terminal mobile (10) et la passerelle suivante (18B), du ou des paramètres de connexion de la ou des connexions virtuelles dynamiques précédentes (52A) au gestionnaire de qualité de service suivant (16B).

15. Réseau de communication (12) selon la revendication 14, dans lequel l'organe d'aiguillage (200) comporte des moyens (218) d'envoi, au gestionnaire de qualité de service suivant (16B), pour chaque connexion virtuelle dynamique (52B) à créer, d'un message de commande de la création de la connexion virtuelle dynamique (52B) correspondante entre le terminal mobile (10) et la passerelle suivante (18B), chaque message de commande comportant le ou les paramètres de connexion associés à ladite connexion virtuelle dynamique (52B).

## Patentansprüche

1. Verfahren zur Verwaltung mindestens einer dynamischen virtuellen Verbindung (52A, 52B) zwischen einem mobilen Endgerät (10) und einem Kommunikationsnetz (12), wobei das mobile Endgerät (10) geeignet ist, mit einer Basisstation (20A, 20B) verbunden zu werden und an ein Gateway (18A, 18B) über die Basisstation angeschlossen zu werden, wobei das Gateway abhängig von der Lokalisierung des mobilen Endgeräts (10) ist, wobei
eine oder mehrere dynamische virtuelle Verbindungen (52A) nach dem LTE Standard zwischen dem mobilen Endgerät (10) und dem Gateway (18A) über die Basisstation (20A) eingerichtet sind, wobei jede mindestens einen Verbindungsparameter aufweist,
das Kommunikationsnetz (12) entsprechend dem LTE Standard ausgebildet ist und eine an mindestens zwei Funkorten (26A, 26B) verteilte Architektur aufweist, wobei ein vorangehender Funkort (26A) seinen eigenen vorangehenden QoS-Manager, sein eigenes vorangehendes Netz-Gateway (18A) und seine eigene(n) vorangehende(n) Basisstation(en) (20A) aufweist, ein nachfolgender Funkort (26B) seinen eigenen nachfolgenden QoS-Manager (16B), sein eigenes nachfolgendes Netz-Gateway (18A) und seine eigene(n) nachfolgende(n) Basisstation(en) (20B) aufweist, wobei das Verfahren den Schritt umfasst, der darin besteht:
- im Anschluss auf die Fortbewegung des Endgeräts von dem vorangehenden Funkort zu dem nachfolgenden Funkort die Verbindung des mobilen Endgeräts (10) an der nachfolgenden Basisstation (20B) zu detektieren, die mit dem nachfolgenden Gateway (18B), an das das mobile Endgerät (10) nicht vorher verbunden war, verbunden ist, wobei der Schritt des Detektierens (100) von dem nachfolgenden Gateway (18B) durchgeführt wird,
wobei das Verfahren außerdem den Schritt umfasst, der darin besteht:
- über den nachfolgenden QoS-Manager (16B), der an das nachfolgende Gateway (18B) angeschlossen ist, eine oder mehrere dynamische virtuelle Verbindungen (52B) gemäß dem LTE Standard zwischen dem mobilen Endgerät (10) und dem nachfolgenden Gateway (18B) zu erzeugen (110, 120), wobei die Anzahl der erzeugten dynamischen virtuellen Verbindungen (52B) zwischen dem mobilen Endgerät (10) und dem nachfolgenden Gateway (18B) gleich der Anzahl der vorangehenden dynamischen virtuellen Verbindungen (52A) ist, die zwischen dem mobilen Endgerät (10) und dem vorangehenden Gateway (18A) erstellt wurden, wobei der oder die Verbindungsparameter der dynamischen virtuellen Verbindung(en) (52B) zwischen dem mobilen Endgerät (10) und dem nachfolgenden Gateway (18B) identisch zu dem oder den Verbindungsparameter(n) der vorangehenden dynamischen virtuellen Verbindung(en) (52A) zwischen dem mobilen Endgerät (10) und dem vorangehenden Gateway (18A) ist.

2. Verfahren nach Anspruch 1, bei dem das Kommunikationsnetz (12) außerdem mehrere Server (28A, 28B), wie VolP-Server, aufweist, wobei jeder mit einem korrespondierenden QoS-Manager (16A, 16B) verbunden ist und über den QoS-Manager (16A, 16B) an ein korrespondierendes Gateway (18A, 18B) angeschlossen ist und
bei dem während des Schritts des Erzeugens der dynamischen virtuellen Verbindung(en) (52B) zwischen dem mobilen Endgerät und dem nachfolgenden Gateway der oder die Verbindungsparameter der vorangehenden dynamischen virtuellen Verbindung(en) (52A) an einen nachfolgenden Server (28B), der an das nachfolgende Gateway (18B) angeschlossen ist, von einem vorangehenden Server (18A), der an das vorangehende Gateway (18A) angeschlossen ist, gesendet werden (110).

3. Verfahren nach Anspruch 2, bei dem der nachfolgende Server (28B) an den vorangehenden Server (28A) eine Anfrage zur Übertragung von Verbindungsparametern schickt, um den oder die Verbindungsparameter der vorangehenden dynamischen virtuellen Verbindung(en) (52A) von dem vorangehenden Server (28A) zu erhalten.

4. Verfahren nach Anspruch 2 oder 3, bei dem während des Schritts des Erzeugens der nachfolgende Server (28B) an den nachfolgenden QoS-Manager (16B) für jede zu erzeugende dynamische virtuelle Verbindung (52B) eine Befehlsmeldung für das Erzeugen der entsprechenden dynamischen virtuellen Verbindung (52B) zwischen dem mobilen Endgerät (10) und dem nachfolgenden Gateway (18B) schickt (120), wobei jede Befehlsmeldung den oder die Verbindungsparameter umfasst, die der dynamischen virtuellen Verbindung (52B) zugeordnet sind.

5. Verfahren nach einem beliebigen der vorangehenden Ansprüche, bei dem das Kommunikationsnetz (12) außerdem eine Verzweigungsstelle (200) aufweist, die geeignet ist, mit jedem korrespondierenden QoS-Manager (16A, 16B) zu kommunizieren und geeignet ist, eine QoS-Anfrage zu einem korrespondierenden QoS-Manager (16A, 16B) zu leiten, und
bei dem während des Schritts des Erzeugens der dynamischen virtuellen Verbindung(en) (52B) zwischen dem beweglichen Endgerät (10) und dem nachfolgenden Gateway (18B) der oder die Verbindungsparameter der dynamischen virtuellen Verbindung(en) von der Verzweigungsstelle (200) an den nachfolgenden QoS-Manager (16B) übertragen werden (110).

6. Verfahren nach Anspruch 5, bei dem während des Schritts des Erzeugens die Verzweigungsstelle (200) an den nachfolgenden QoS-Manager (16B) für jede zu erzeugende dynamisch virtuelle Verbindung (52B) eine Befehlsmeldung des Erzeugens der korrespondierenden dynamischen virtuellen Verbindung (52B) zwischen dem mobilen Endgerät (10) und dem nachfolgenden Gateway (18B) schickt (120), wobei jede Befehlsmeldung den oder die Verbindungsparameter umfasst, die der dynamischen virtuellen Verbindung (52B) zugeordnet sind.

7. Verfahren nach einem beliebigen der vorangehenden Ansprüche, bei dem das Kommunikationsnetz (12) konform zu der Version 8 und zu den nachfolgenden Versionen des LTE Standards ist, der von dem Normungsausschuss 3GPP definiert ist.

8. Verfahren nach einem beliebigen der vorangehenden Ansprüche, bei dem der oder die Verbindungsparameter aus der Gruppe ausgewählt sind, die besteht aus: einem Kennzeichen einer Verbindungsklasse, einem Prioritätsniveau, einer garantierten Datenrate und einer maximalen Datenrate; wobei jeder Verbindungsklasse eine Priorität, eine maximale Latenzzeit und eine maximale Verlustrate von Paketen zugeordnet ist.

9. Programmprodukt für einen Rechner, Softwareanweisungen umfassend, die, wenn sie von einem Rechner ausgeführt werden, die Schritte des Verfahrens nach den Ansprüchen 3 oder 4, die dem nachfolgenden Server (18B) obliegen, durchführen.

10. Programmprodukt für einen Rechner, Softwareanweisungen umfassend, die, wenn sie von einem Rechner ausgeführt werden, die Schritte des Verfahrens nach den Ansprüchen 5 oder 6, die der Verzweigungsstelle (200) obliegen, durchführen.

11. Kommunikationsnetz (12) zum Kommunizieren mit mindestens einem mobilen Endgerät (10),
wobei das mobile Endgerät (10) geeignet ist, mit einer Basisstation (20A, 20B) verbunden zu werden und an ein Gateway (18A, 18B) über die Basisstation angeschlossen zu werden, wobei das Gateway abhängig von der Lokalisierung des mobilen Endgeräts (10) ist,
eine oder mehrere dynamische virtuelle Verbindungen (52A) nach dem LTE Standard geeignet sind, zwischen dem mobilen Endgerät (10) und dem Gateway (18A) über die Basisstation (20A) eingerichtet zu werden, wobei jede mindestens einen Verbindungsparameter aufweist,
das Kommunikationsnetz (12) entsprechend dem LTE Standard ausgebildet ist und eine an mindestens zwei Funkorten (26A, 26B) verteilte Architektur aufweist, wobei ein vorangehender Funkort (26A) seinen eigenen vorangehenden QoS-Manager, sein eigenes vorangehendes Netz-Gateway (18A) und seine eigene(n) vorangehende(n) Basisstation(en) (20A) aufweist, ein nachfolgender Funkort (26B) seinen eigenen nachfolgenden QoS-Manager (16B), sein eigenes nachfolgendes Netz-Gateway (18A) und seine eigene(n) nachfolgende(n) Basisstation(en) (20B) aufweist,
wobei das Netz (12) außerdem Detektionsmittel (60) umfasst, die geeignet sind, im Anschluss auf die Fortbewegung des Endgeräts von dem vorangehenden Funkort zu dem nachfolgenden Funkort die Verbindung des mobilen Endgeräts (10) an der nachfolgenden Basisstation (20B) zu detektieren, die mit dem nachfolgenden Gateway (18B) verbunden ist, an das das mobile Endgerät (10) nicht vorher verbunden war, wobei die Detektionsmittel (60) in dem nachfolgenden Gateway (18B) umfasst sind,
und Mittel (66, 68, 54, 62; 216, 218, 54, 62) zum Erzeugen über den nachfolgenden QoS-Manager (16B), der an das nachfolgende Gateway (18B) angeschlossen ist, einer oder mehrerer dynamischen virtuellen Verbindungen (52B) gemäß dem LTE Standard zwischen dem mobilen Endgerät (10) und dem nachfolgenden Gateway (18B), wobei die Anzahl der erzeugten dynamischen virtuellen Verbindungen (52B) zwischen dem mobilen Endgerät (10) und dem nachfolgenden Gateway (18B) gleich der Anzahl der vorangehenden dynamischen virtuellen Verbindungen (52A) ist, die zwischen dem mobilen Endgerät (10) und dem vorangehenden Gateway (18A) erstellt wurden, wobei der oder die Verbindungsparameter der dynamischen virtuellen Verbindung(en) (52B) zwischen dem mobilen Endgerät (10) und dem nachfolgenden Gateway (18B) identisch zu dem oder den Verbindungsparameter(n) der vorangehenden dynamischen virtuellen Verbindung(en) (52A) zwischen dem mobilen Endgerät (10) und dem vorangehenden Gateway (18A) ist.

12. Kommunikationsnetz (12) nach Anspruch 11, bei dem das Kommunikationsnetz (12) außerdem mehrere Server (28A, 28B), wie VolP-Server, aufweist, wobei jeder mit einem korrespondierenden QoS-Manager (16A, 16B) verbunden ist und über den QoS-Manager (16A, 16B) an ein korrespondierendes Gateway (18A, 18B) angeschlossen ist und
bei dem ein vorangehender Server (28A), der an das vorangehende Gateway (18A) angeschlossen ist, Mittel (66) zum Übertragen des oder der Verbindungsparameter der vorangehenden dynamischen virtuellen Verbindung(en) (52A) an einen nachfolgenden Server (28B), der an das nachfolgende Gateway (18B) angeschlossen ist, während der Erzeugung der dynamischen virtuellen Verbindung(en) zwischen dem mobilen Endgerät (10) und dem nachfolgenden Gateway (18B), aufweist.

13. Kommunikationsnetzwerk (12) nach Anspruch 12, bei dem der nachfolgende Server (28B) Mittel (68) zum Senden an den nachfolgenden QoS-Manager (16B) für jede zu erzeugende dynamische virtuelle Verbindung (52B) einer Befehlsmeldung für das Erzeugen der entsprechenden dynamischen virtuellen Verbindung (52B) zwischen dem mobilen Endgerät (10) und dem nachfolgenden Gateway (18B), wobei jede Befehlsmeldung den oder die Verbindungsparameter umfasst, die der dynamischen virtuellen Verbindung (52B) zugeordnet sind.

14. Kommunikationsnetzwerk (12) nach einem beliebigen der Ansprüche 11 bis 13, bei dem das Kommunikationsnetz (12) außerdem eine Verzweigungsstelle (200) aufweist, die geeignet ist, mit jedem korrespondierenden QoS-Manager (16A, 16B) zu kommunizieren und geeignet ist, eine QoS-Anfrage zu einem korrespondierenden QoS-Manager (16A, 16B) zu leiten, und
bei dem die Verzweigungsstelle (200) Mittel (216) zum Übertragen des oder der Verbindungsparameter der dynamischen virtuellen Verbindung(en) während des Erzeugens der dynamischen virtuellen Verbindung(en) (52B) zwischen dem beweglichen Endgerät (10) und dem nachfolgenden Gateway (18B) an den nachfolgenden QoS-Manager (16B) aufweist.

15. Kommunikationsnetzwerk (12) nach Anspruch 14, bei dem die Verzweigungsstelle (200) Mittel (218) zum Senden an den nachfolgenden QoS-Manager (16B) für jede zu erzeugende dynamisch virtuelle Verbindung (52B) einer Befehlsmeldung des Erzeugens der korrespondierenden dynamischen virtuellen Verbindung (52B) zwischen dem mobilen Endgerät (10) und dem nachfolgenden Gateway (18B) aufweist, wobei jede Befehlsmeldung den oder die Verbindungsparameter umfasst, die der dynamischen virtuellen Verbindung (52B) zugeordnet sind.

## Claims

1. A method for managing at least one dynamic virtual connection (52A , 52B) between a mobile terminal (10) and a communication network (12), the mobile terminal (10) being capable of being connected to a base station (20A, 20B) and of being connected to a gateway (18A, 18B) via the base station, the said gateway being dependent upon the location of the mobile terminal (10),
one or more dynamic virtual connections (52A) in accordance with the LTE standard being arranged between the mobile terminal (10) and the gateway (18A), via the base station (20A), each having at least one connection parameter,
the communication network (12) being in conformity with the LTE standard and presenting a distributed architecture in at least two radio sites (26A, 26B), a previous radio site including its own previous quality service manager (16A), its own previous network gateway (18A) and its own previous base station(s) (20A), a subsequent radio site including its own subsequent quality service manager (16B), its own subsequent network gateway (18A) and its own subsequent base station(s) (20B), the method includes the step consisting of :
- further to the displacement of the terminal from the previous radio site to the subsequent radio site, detecting (100) the connection of the mobile terminal (10) to the subsequent base station (20B) connected to the subsequent gateway (18B) to which the mobile terminal (10) was not previously connected, the step of detecting (100) being carried out by the subsequent gateway (18B),
the method further comprising the step that consists of:
- creating (110, 120) via the subsequent quality of service manager (16B) connected to the subsequent gateway (18B), one or more dynamic virtual connections (52B) according to the LTE standard between the mobile terminal (10) and the subsequent gateway (18B), the number of dynamic virtual connections created (52B) between the mobile terminal (10) and the subsequent gateway (18B) being equal to the number of preceding dynamic virtual connections (52A) arranged between the mobile terminal (10) and the preceding gateway (18A), and the connection parameter or parameters of the dynamic virtual connection or connections (52B) between the mobile terminal (10) and the subsequent gateway (18B) being identical to the connection parameter or parameters of the preceding dynamic virtual connection or connections (52A) between the mobile terminal (10) and the preceding gateway (18A).

2. A method according to claim 1, in which the communication network (12) further comprises a plurality of servers (28A, 28B), such as Voice over Internet Protocol servers, each being connected to a corresponding quality of service manager (16A), 16B) and being connected to a corresponding gateway (18A, 18B) via the said quality of service manager (16A), 16B), and
wherein, during the step of creating the dynamic virtual connection or connections (52B) between the mobile terminal and the subsequent gateway, the connection parameter or parameters of the preceding dynamic virtual connection or connections (52A) are transmitted (110) to a subsequent server (28B) connected to the subsequent gateway (18B) from a preceding server (28A) connected to the preceding gateway (18A).

3. A method according to claim 2, in which the subsequent server (28B) sends o the preceding server (28A) a transmission request requesting transmission of connection parameters in order to receive the connection parameter or parameters of the preceding dynamic virtual connection or connections (52A) from the preceding server (28A).

4. A method according to claim 2 or 3, in which, during the step of creating connections, the subsequent server (28B) sends (120) to the subsequent quality of service manager (16B), for each dynamic virtual connection (52B) to be created, a command message ordering the creation of the corresponding dynamic virtual connection (52B) between the mobile terminal (10) and the subsequent gateway (18B), each command message containing the connection parameter or parameters associated with the said dynamic virtual connection (52B).

5. A method according to any one of the preceding claims, in which the communication network (12) further includes a switching member (200) capable of communicating with each corresponding quality of service manager (16A, 16B) and adapted to route a quality of service related request to a corresponding quality of service manager (16A, 16B), and
in which, during the step of creating the dynamic virtual connection or connections (52B) between the mobile terminal (10) and the subsequent gateway (18B), the connection parameter or parameters of the dynamic virtual connections are transmitted (110) to the subsequent quality of service manager (16B) by the switching member (200).

6. A method according to claim 5, in which, during the step of creating, the switching member (200) sends (120), to the subsequent quality of service manager (16B), for each dynamic virtual connection (52B) to be created, a command message ordering the creation of the corresponding dynamic virtual connection (52B) between the mobile terminal (10) and the subsequent gateway (18B), each command message containing the connection parameter or parameters associated with the said dynamic virtual connection (52B).

7. A method according to any one of the preceding claims, in which the communication network (12) is in conformity with version 8 and with the subsequent versions of the LTE standard, as defined by the standardisation body 3GPP.

8. A method according to any one of the preceding claims, in which the connection parameter or parameters are selected from the group consisting of : an identifier of a connection class, a priority level, a guaranteed throughput and a maximum throughput ; there being assigned to each connection class, a priority, a maximum latency and a maximum packet loss rate.

9. A computer programme product comprising software instructions, which when they are executed by a computer, implement the steps of the method according to claims 3 or 4, that are incumbent upon the subsequent server (28B).

10. A computer programme product comprising software instructions, which when they are executed by a computer, implement the steps of the method according to claims 5 or 6, that are incumbent upon the switching member (200).

11. A communication network (12) for communicating with at least one mobile terminal (10),
the mobile terminal (10) being capable of being connected to a base station (20A, 20B) and of being connected to a gateway (18A, 18B) via the base station, the said gateway being dependent upon the location of the mobile terminal (10),
one or more dynamic virtual connections (52A) in accordance with the LTE standard being adapted to be arranged between the mobile terminal (10) and the gateway (18A), via the base station (20A), each having at least one connection parameter,
the network (12) being in conformity with the LTE standard and presenting a distributed architecture in at least two radio sites (26A, 26B), a previous radio site including its own previous quality service manager (16A), its own previous network gateway (18A) and its own previous base station(s) (20A), a subsequent radio site (26B) including its own subsequent quality service manager (16B), its own subsequent network gateway (18A) and its own subsequent base station(s) (20B),
the network (12) further including the detection means (60) able for detecting, further to the displacement of the terminal from the previous radio site to the subsequent radio site, the connection of the mobile terminal (10) to the subsequent base station (20B) connected to the subsequent gateway (18B) to which the mobile terminal (10) was not previously connected, the detection means (60) being included in the subsequent gateway (18B),
and creation means (66, 68, 54, 62, 216, 218, 54, 62) for creating, via the subsequent quality of service manager (16B) connected to the subsequent gateway (18B), one or more dynamic virtual connections (52B) according to the LTE standard between the mobile terminal (10) and the subsequent gateway (18B), the number of dynamic virtual connections created (52B) between the mobile terminal (10) and the subsequent gateway (18B) being equal to the number of preceding dynamic virtual connections (52A) arranged between the mobile terminal (10) and the preceding gateway (18A), and the connection parameter or parameters of the dynamic virtual connection or connections (52B) between the mobile terminal (10) and the subsequent gateway (18B) being identical to the connection parameter or parameters of the preceding dynamic virtual connection or connections (52A) between the mobile terminal (10) and the preceding gateway (18A).

12. A communication network (12) according to claim 11, in which the communication network (12) further comprises a plurality of servers (28A, 28B), such as Voice over IP servers, each being connected to a corresponding quality of service manager (16A, 16B) and being connected to a corresponding gateway (18A, 18B) via the said quality of service manager (16A, 16B), and
in which a preceding server (28A) connected to the preceding gateway (18A) includes the transmission means (66) for transmitting, during the creation of the dynamic virtual connection or connections between the mobile terminal (10) and the subsequent gateway (18B), the connection parameter or parameters of the preceding dynamic virtual connection or connections (52A) to a subsequent server (28B) connected to the subsequent gateway (18B).

13. A communication network (12) according to claim 12, in which the subsequent server (28B) comprises the message despatch means (68) for sending, to the subsequent quality of service manager (16B), for each dynamic virtual connection (52B) to be created, a command message ordering the creation of the corresponding dynamic virtual connection (52B) between the mobile terminal (10) and the subsequent gateway (18B), each command message containing the connection settings and parameter or parameters associated with the said dynamic virtual connection (52B).

14. A communication network (12) according to any one of claims 11 to 13, in which the communication network (12) further includes a switching member (200) capable of communicating with each corresponding quality of service manager (16A, 16B) and adapted to route a quality of service related request to a corresponding quality of service manager (16A, 16B), and
in which the switching member (200) includes transmission means (216) for transmitting, during the creation of the dynamic virtual connection or connections between the mobile terminal (10) and the subsequent gateway (18B), the connection parameter or parameters of the preceding dynamic virtual connection or connections (52A) to the subsequent quality of service manager (16B).

15. A communication network (12) according to claim 14, in which the switching member (200) comprises message despatch means (218) for sending, to the subsequent quality of service manager (16B), for each dynamic virtual connection (52B) to be created, a command message ordering the creation of the corresponding dynamic virtual connection (52B) between the mobile terminal (10) and the subsequent gateway (18B), each command message containing the connection parameter or parameters associated with the said dynamic virtual connection (52B).
